# EUROPEAN PATENT SPECIFICATION

(11) **EP 1 938 585 B1**
(45) Date of publication and mention of the grant of the patent: **19.06.2013**
(21) Application number: 06805700.9
(22) Date of filing: 12.09.2006
(51) Int. Cl.: H04N 5/225, H04N 5/33

(54) **OPTICAL RECORDING APPARATUS FOR WIRELESS EQUIPMENT**
OPTISCHE AUFZEICHNUNGSVORRICHTUNG FÜR DRAHTLOSE GERÄTE
APPAREIL D'ENREGISTREMENT OPTIQUE POUR ÉQUIPEMENT SANS FIL

(30) Priority: 11.10.2005 US 247420
(43) Date of publication of application: 02.07.2008
(73) Proprietor: Sony Ericsson Mobile Communications AB, 221 88 Lund (SE)
(72) Inventor: WERNERSSON, Mats, S-252 63 Helsingborg (SE)
(74) Representative: Banzer, Hans-Jörg
(86) International application number: PCT/EP2006/008885
(87) International publication number: WO 2007/042113

(56) References cited:
- EP-A- 1 487 199
- EP-A1- 0 605 898
- EP-A2- 1 478 174
- US-A- 5 982 423
- US-A1- 2002 030 755
- US-A1- 2003 036 365
- US-A1- 2005 140 786

## Description

### TECHNICAL FIELD OF THE INVENTION

The proposed invention relates to an optical recording apparatus for a wireless electronic equipment. It solves the problem of using a camera, and in particular a video conference camera, in low light conditions.

### DESCRIPTION OF RELATED ART

At the moment digital cameras of state of the art used in mobile phones can typically be used at light levels down to 5 to 10 lux. The image quality is however poor under such low light conditions.

Mobile phones of the state of the art use a white light emitting diode (LED) as an assisting light. The LED makes it possible to use the camera even in complete darkness.

Some phones may even have a Xenon flash (discharge tube). The Xenon flash solution is considered the best choice from a technical/image quality point of view. This solution can however only be used for still images. The LED solution can be used for still images and video recording/video conferencing. There are several disadvantages with the white LED solution. The range is limited to about 0.5 m (continuous use) due to power consumption and heat dissipation problems. This is a severe limitation for video recording. While 0.5 m is sufficient for video conferencing where the main purpose is to show the person making the call another problem arises. A strong LED aimed directly towards a person's eyes is very annoying. The user may also like to avoid attention when using the phone in a public environment. The video conferencing camera is usually aimed in the opposite direction to the phones main camera and cannot rake advantage of the main camera's LED. The cost for an extra LED rivals the cost for the complete video camera itself.

As another possibility being state of the art for recording in low light conditions is the night vision technology known from Sony video cameras as well as from surveillance equipment. This technique takes advantage of the fact that complementary metal-oxide-semiconductor (CMOS) and charge-coupled device (CCD) image sensors are very sensitive to infrared radiation (IR). A digital camera intended for normal use has an infrared cut off filter in order to reduce the cameras sensitivity to visible radiation. Without this filter the colour rendition becomes poor.

A camera with a vision switch, such as a Sony video camera, has a removable IR-cut off filter. The filter is moved in or out of the optical path by some mechanical means. The camera is usually equipped with an IR-LED which lights up the scene with radiation invisible to the human eye. An IR-LED in combination with a night vision camera is much more efficient than a white LED used with a standard colour camera. An obvious drawback with night vision is that only black and white pictures can be produced.

The implementation of a night vision camera in a mobile phone is more difficult due to the miniaturization of the camera and the high standards of robustness. A moveable filter is feasible but adds cost, size and risk. A further problem with the moveable filter solution is the fact that colour cameras have colour mosaic filters attached to each pixel of the sensor. The red, green, and blue filters are necessary for taking colour pictures but reduce the efficiency of the night vision mode. This colour filter array is an integrated part of the sensor and it cannot be removed.

From US 2005/0140786 A1 a dual spectral band network camera is known which comprises a lower resolution monochrome image sensor for capturing infrared images and which has an associated lens for focusing, and separate therefrom a higher resolution colour image sensor with an infrared cut filter and an associated further lens for focusing.

Further devices enabling colour and infrared recording are known from US 2002/030755 A1, EP-A-1487199, EP-A1-0605898 or EP-A2-1478174.

### SUMMARY

The problem is solved by a device as defined in claim 1. The dependent claims define further embodiments.

The present invention has the advantage compared to the prior art that no or less moving parts are needed. There are e.g. no moving parts for the infrared cut off filter necessary. Thus robustness, simplicity in the design and small sizes of the apparatus are feasible.

Another advantage is the resource sharing of different devices e.g. the integrated chip for the recording devices that yields low costs.

Another advantage is also a higher sensitivity of the infrared recording device compared to a moving filter design of the prior art since no colour filter array is set up in the infrared recording device. While the sensor of the moving filter design is recording both infrared and visible light it has to be always equipped with a colour filter array reducing the sensitivity.

Another advantage is that no refocusing is needed when switching from the colour recording device to the infrared recording device or the other way around.

The proposed invention can be applied to most digital cameras but is especially suitable for video telephony in mobile phones.

The proposed invention is a dual camera design. Two cameras are built into one module where resources are shared between the two. Benefits in cost size and functionality are obtained as will be described below.

### BRIEF DESCSRIPTION OF THE DRAWINGS

In the following description the invention will be explained in more detail in relation to the enclosed drawings, in which
Fig. 1 shows an example of a wireless electronic equipment comprising an embodiment of the optical recording apparatus.
Fig. 2 shows a general, schematical view of an embodiment of the optical recording apparatus of the present invention.
Fig. 3 shows a schematical view of a colour recording device of the present invention.
Fig. 4 shows a schematical view of a colour image sensor of the present invention.
Fig. 5 shows a schematical view of an infrared recording device of the present invention.
Fig. 6 shows a cross section of an embodiment of the present invention.
Fig. 7 shows an example of a focusing device of the present invention.
Fig. 8 shows an example of a focusing device of the present invention
Fig. 9 shows a general layout of the integrated chip of the present invention.
Fig. 10 shows a schematical view of an optical recording apparatus comprising an additional infrared light source.

### DETAILED DESCRIPTION OF EMBODIMENTS

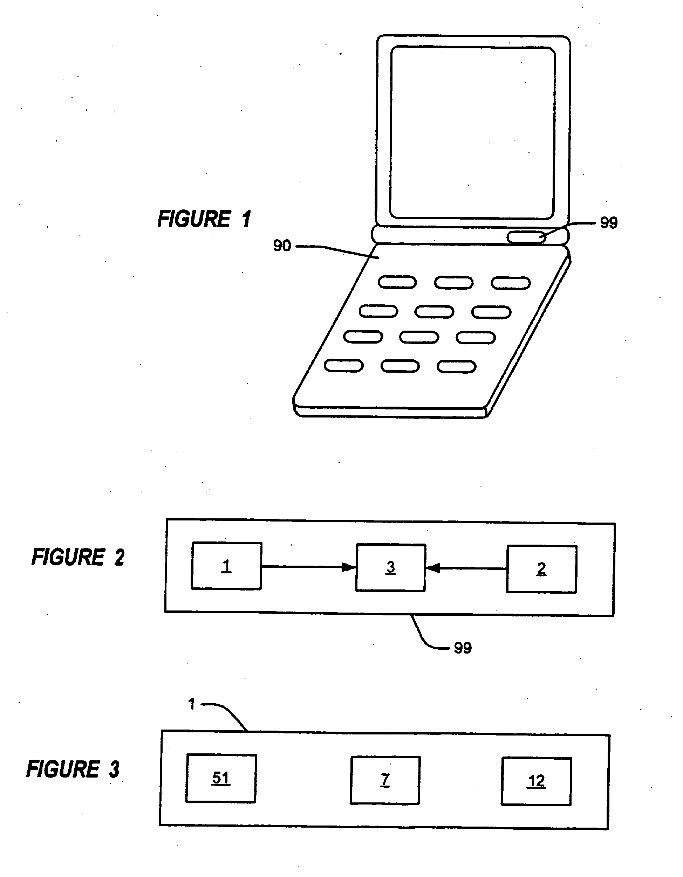

Figure 1 shows a wireless electronic equipment comprising an embodiment of the optical recording apparatus 99; the term electronic equipment includes portable radio communication equipment. The term portable radio communication equipment, which herein after is referred to as a mobile radio terminal, includes all equipment such as mobile telephones, pagers, communicators, i.e. electronic organizers, smartphones or the like. Thus the cell phone 90 and the place where the optical recording apparatus 99 is placed are just examples.

Figure 2 shows a general, schematical view of an embodiment of the present invention wherein an optical recording apparatus 99 comprises an infrared recording device 2, a colour recording device 1 and an interface device 3.

The infrared recording device 2 is designed to receive light in the infrared spectrum, focus the light on a recording device and transform the image in processable data. The wavelength of the light recordable by the infrared recording device 2 ranges in the infrared spectrum from about 750 nm to about 1000 nm. The infrared recording device 2 is favourably utilised when recording in low light conditions which is below 10 lux. The colour recording device 1 is designed to receive light in the visible spectrum, focus the light on a recording device and transform the image in processable data. The wavelength of the light recordable by the colour recording device 1 ranges in the visible spectrum from about 380 nm to about 750 nm. The colour recording device 1 is favourably utilised when recording in normal or well lit conditions which is above 10 lux.

The interface device 3 receives data from the recording means and redirects the data to a next unit preferably a processing device.

This embodiment is located in a wireless electronic equipment as described in Figure 1.

Figure 3 shows a schematical view of a colour recording device 1 of the optical recording device in Figure 2 of the present invention. It comprises a focusing device 51, an infrared cut off filter 7 and a colour image sensor 12.

The colour recording device 1 is the same as described in Figure 2.

The focusing device 51 receives the light from an object and focuses it on the colour image sensor 12. The focusing device 51 can comprise either a complete system of a plurality of optical components or only one part. The light on its way to the colour image sensor 12 is filtered by an infrared cut off filter 7. The infrared cut off filter 7 cuts out the light of the infrared spectrum, before the light hits the colour image sensor 12. The colour image sensor 12 receives the light and transforms it into electronical data according to the light's wavelength and/or intensity.

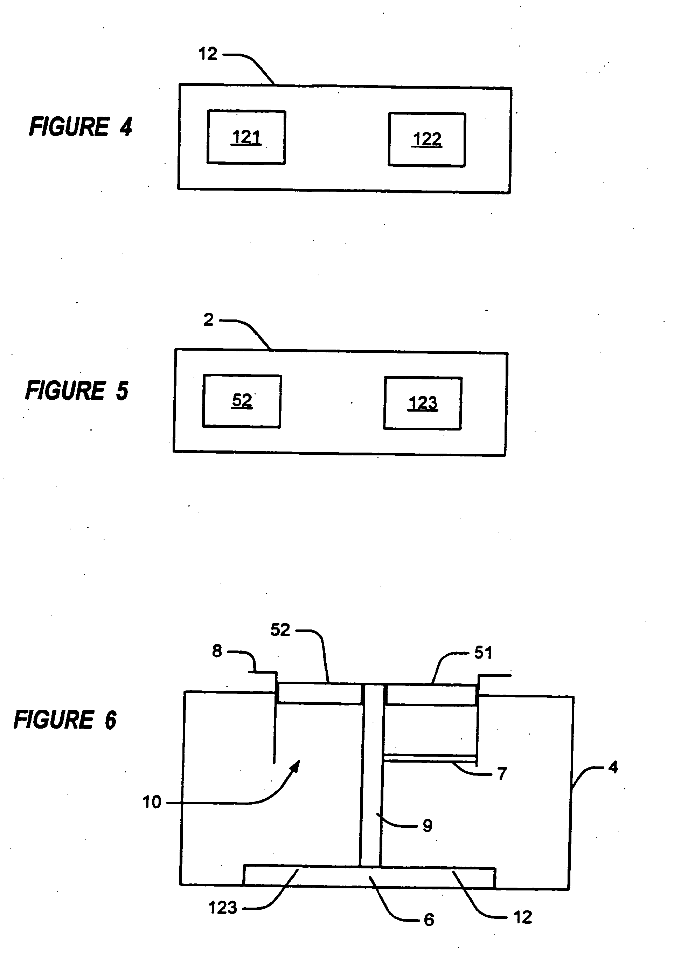

Figure 4 shows a schematical view of a colour image sensor 12 of the present invention. It comprises a colour filter array 121 and an image sensor 122.

The colour filter array 121 splits the light of the visible spectrum into its fundamental colours. Depending on the image sensor's 122 properties the colour filter array 121 comprises typical colour pattern like e.g. the colours red, green and blue or cyan, magenta and yellow. After the light travelled through the colour filter array 121, it engages with the image sensor 122 which transforms the light into electronical data according to the light's wavelength and/or intensity.

Figure 5 shows a schematical view of an infrared recording device 2 of the present invention. It comprises a focusing device 52 and an image sensor 123.

The infrared recording device 2 has the same task as described in Figure 1.

The focusing device 52 has the same task as the one described in Figure 2 and the image sensor 123 has the same task as the one described in Figure 3. Since no colour filter array 121 is applied for the incident light, a higher sensitivity for infrared light is attainable compared to the prior art of cameras recording both colour and infrared on the same sensor using a colour filter array.

Figure 6 shows a cross section of an embodiment of the present invention. It comprises a housing 4, a space separating means 9, an integrated chip 6, the infrared cut off filter 7, two focusing devices 51 & 52 and a mounting means 8.

The housing 4 is opaque to avoid incident light which did not travel from the object to be imaged through the focusing device 51 or 52. It also comprises an opening 10 wherein the mounting means 8 is set up. The housing 4 has to be broad enough to house the integrated chip 6 and high enough to allow reasonable focusing with the focusing devices 51 & 52 and enough space for the additional infrared cut off filter 7 of the colour recording device 1.

The space separating means 9 is used in the housing 4 to separate the space located between the image sensor 123 and its focusing device 52 and the other space located between the colour image sensor 12, the infrared cut off filter 7 and its focusing device 51. Thus it is possible to record two images concurrently and independently without incidence of light destined for the other sensor. So one image is only recording the infrared light and the other the visible light.

The integrated chip 6 is located on the bottom of the housing 4 and comprises the colour image sensor 12, the image sensor 123 and the interface device 3 as integrated parts.

The mounting means 8 is set up in the opening 10 of the housing 4 and comprises the focusing devices 51 & 52 and the infrared cut off filter 7. If required, the mounting means 8 is movable to and from the integrated chip 6 as described later. The infrared cut off filter 7 is fixedly set up in the mounting means 8. Thus robustness, simplicity in the design and small camera sizes are assured compared to the prior art.

The focusing devices 51 & 52 are the same as described in Figure 2 and 4. The infrared cut off filter 7 is the same as described in Figure 2. The colour recording device 1 and the infrared recording device 2 are set up according to Figure 2 and 3, respectively. To allow simple switching between the colour recording device 1 and the infrared recording device 2 without refocusing on the recording range, the images of both recording means have to be concurrently focused; independent of the object range achievable by an embodiment of the present invention. There are three possible solutions how to correlate the focusing devices 51 & 52 with each other which is described as followed:

The mounting means 8 is placed in the opening 10 and is movably to and from the integrated chip 6 and its sensors 123 & 12. Since the focusing devices 51 & 52 are fixedly set up in the mounting means 8, they have to be calibrated during the assembly of the camera to ensure concurrently focused images for the same recording range for the infrared recording device 2 and the colour recording device 1 for all the time.

The other possibility is to achieve the focusing by the focusing devices 51 & 52 themselves instead of moving the mounting means 8. The focusing devices 51 & 52 are correlated the whole time with each other in a way to avoid refocusing when switching from the infrared recording device 2 to the colour recording device 1 or the other way around. Thus when once the object is focused, switching the recording means 1 & 2 the image will stay focused. The focusing is achieved by a focal distance altering device described below.

In another possibility the focusing devices 51 & 52 are focused during assembly at the same focal distance. This focal distance is not alterable after the assembly since neither the focusing devices 51 & 52 nor their mounting means 8 will be movable and no other device operable to alter the focal distance will exist; thus the focusing devices 51 & 52 are fixedly set up in the mounting means 8. This focal distance is chosen for a specific range depending on the application.

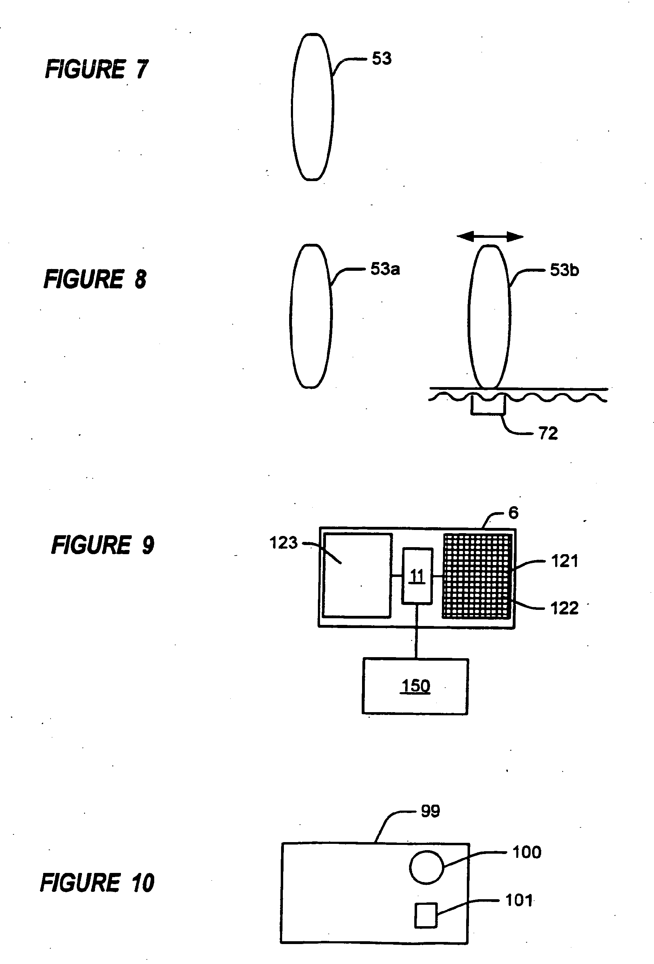

Figure 7 shows an example of a focusing device 53 of the present invention. It comprises a biconvex lens 53.

But it could also comprise e.g. a planar convex lens 53. These examples illustrate that the focusing device is a simple system of one lens 53 instead of a complex system of a plurality of optical parts.

Figure 8 shows an example of a focusing device 57 of the present invention. It comprises two biconvex lenses which stands for a system of plurality of optical parts and a focal distance altering device 72.

There are other examples for the biconvex lenses possible comprising prisms and other types of lenses like concave ones. There are also other examples for a focal distance altering device 72 than the one described in Figure 8. This one is working with a rail system and a gear-wheel moving one lens away or towards the other lens to alternate the focal distance. The movable lens is set up on the rail system.

Figure 9 shows an example of the layout of the integrated chip 6 of the present invention. It comprises two image sensors, one for visible and one for infrared light, and an interface device 11.

One sensor is for the colour recording device 1 and is equipped with a colour filter array 121. The other sensor is for the infrared recording device 2. Both sensors are preferably of the same type to reduce costs and are designed to identify infrared light and visible light. While the sensors 123 & 122 are of the same type, the colour image sensor differs by a colour filter array from the image sensor recording the infrared light. Thus both image sensors 123 & 122 are capable to record both infrared and visible light; depending whether they are equipped with the colour recording array 121 and/or the infrared cut off filter 7. The sensors 122 & 123 themselves are preferably of the CIF format but can be of any other electronical sensor sensible to infrared radiation and capable of picturing.

The interface device 11 is operable to receive and redirect data from the image sensor and/or the colour image sensor as described in Figure 2. The interface device is connected to or part of a processing device which is operable to process data from the sensors redirected by the interface device 11 and handles images processing and/or communication tasks. The processing device is a digital signal processor 11. It is processing the recorded data of one sensor at a time. This processing device is only an example and there are other realisations for a processing device possible. It is also a possibility to record the data of both sensors at the same time. The processing device is located on the integrated chip 6, but can be also located on a separate chip inside the housing or on a separate chip outside the housing.

Figure 10 shows a schematical view of the present invention of the optical recording apparatus 99. It comprises an infrared light source and an automatic focusing device 101.

This light source emits infrared light and helps to light up the environment and the object being pictured. Preferably the light source is formed as a LED 100 to save a mobile phone's energy. Though the infrared recording device 2 is capable to record better images than the colour recording device 1 in low light conditions, the infrared light source greatly improves the image quality for a trade-off of a small and energy-saving infrared light source like an infrared LED.

Advantageously a possible arrangement of the present invention comprises also an automatic focusing device 101 for automatically focusing one of the focusing device preferably the one whose image sensor has the better image resolution at a specific light condition. In low light conditions the infrared recording device is chosen, and in normal lit or well lit conditions the colour recording device is chosen.

The following are examples of the formats of image sensors 123 & 122:

Video telephony is currently limited in image resolution to the QCIF format (176 x 144 pixels). The sharpest possible images are not produced with a QCIF sensor due to the effect of the colour interpolation process. Using a CIF format sensor (352 x 288 pixels) and reducing the image format digitally yields better results. Solutions using even higher resolutions (e.g. VGA, 640 x 480 pixels) are possible sensor implementations.

## Claims

1. An optical recording apparatus (99) for a wireless electronic equipment (90) comprising an infrared recording device (2) operable to receive light in the infrared spectrum and record data according to the received light in the infrared spectrum, a colour recording device (1) operable to receive light in the visible spectrum and record data according to the received light in the visible spectrum and
an interface device (3; 11) operable to redirect the data from the infrared recording device (2) and the colour recording device (1),
wherein the infrared recording device (2) comprises an image sensor (123) operable to record light in the infrared spectrum and
a first focusing device (52) to focus the light from an object on the image sensor (123),
wherein the colour recording device (1) comprises a colour image sensor (12) operable to record light in the visible spectrum,
a second focusing device (51) to focus the light from an object on the colour image sensor (12), and
an infrared cut off filter (7) operable to filter light in the infrared spectrum and
wherein the image sensor (123) and the colour image sensor (12) are formed on the same integrated chip (6),
wherein the optical recording apparatus (99) further comprises
a space separating device (9) operable to separate the first focusing device (52) and the space between the first focusing device (52) and the image sensor (123) from the second focus-ing device (51), the infrared cut-off filter (7) and the space between the second focusing device (51) and the colour image sensor (12).

2. An optical recording apparatus (99) according to claim 1
wherein the first and second focusing devices (51, 52) are always concurrently focused on the same object range being recorded by the infrared recording device (2) and the colour recording device (1).

3. An optical recording apparatus (99) according to one of the claims 1 or 2
wherein the colour image sensor comprises
a colour filter array (121) operable to split light in the visible spectrum into its fundamental colours and
an image sensor (122) operable to record light in the visible spectrum.

4. An optical recording apparatus (99) according to one of the above-mentioned claims
wherein the integrated chip (6) further comprises the interface device (11), and the apparatus (99) further comprises an opaque housing (4) with an opening and operable to store the integrated chip (6) and the space separating device (9).

5. An optical recording apparatus (99) according to claim 4
wherein the interface device (11) is connected to or part of a processing device (11; 150)
whereby said processing device (11; 150) is operable to process data from the infrared recording device (2) and the colour recording device (1).

6. An optical recording apparatus (99) according to claim 5
wherein the processing device (11; 150) is processing data from either the infrared recording device (2) or the colour recording device (1) at a time.

7. An optical recording apparatus (99) according to one of the claims 5 or 6
wherein the processing device (11; 150) comprises a digital signal processor.

8. An optical recording apparatus (99) according to one of the claims 4 to 7 and 2
wherein a mounting device (8) is located in the opening and operable to hold the first and second focusing devices (51, 52) and the infrared cut off filter (7).

9. An optical recording apparatus (99) according to claim 8 wherein the infrared cut off filter (7) is fixedly set up in the mounting device (8).

10. An optical recording apparatus (99) according to one of the claims 4 to 9 and 2
wherein the first and second focusing devices (51, 52) are fixedly set up in the mounting device (8) at an unalterable focal distance.

11. An optical recording apparatus (99) according to one of the claims 4 to 9 and 2
wherein the first and second focusing devices (51, 52) are correlated in respect to each other by the holding position in the mounting device (8).

12. An optical recording apparatus (99) according to one of the claims 4 to 9 and 2
wherein the first and second focusing devices (51, 52) are correlated in respect to each other by a focal distance altering device (72) operable to alter the focal distance of the focusing devices.

13. An optical recording apparatus (99) according to one of the claims 11 or 12
comprising an automatic focusing device (101) operable to automatically focus one of the first and second focusing devices (51, 52) preferably the one whose image sensor (12, 123) has the better image resolution at a current light conditions.

14. An optical recording apparatus (99) according to one of the above-mentioned claims comprising an infrared light emitting diode (100) operable to illuminate the environment with light in the infrared spectrum.

15. An electronic system (90) comprising the optical recording apparatus (99) according to one of the above-mentioned claims and an electronical equipment.

## Patentansprüche

1. Optische Aufzeichnungsvorrichtung (99) für eine drahtlose elektronische Einrichtung (90), umfassend eine Infrarotaufzeichnungsvorrichtung (2), welche ausgestaltet ist, Licht in dem Infrarotspektrum zu empfangen und Daten gemäß dem empfangenen Licht in dem Infrarotspektrum aufzuzeichnen,
eine Farbaufzeichnungsvorrichtung (1), welche ausgestaltet ist, Licht in dem sichtbaren Spektrum zu empfangen und Daten gemäß dem empfangenen Licht in dem sichtbaren Spektrum aufzuzeichnen, und
eine Schnittstellenvorrichtung (3; 11), welche ausgestaltet ist, die Daten von der Infrarotaufzeichnungsvorrichtung (2) und der Farbaufzeichnungsvorrichtung (1) umzuleiten,
wobei die Infrarotaufzeichnungsvorrichtung (2) umfasst:
einen Bildsensor (123), welcher ausgestaltet ist, Licht in dem Infrarotspektrum aufzuzeichnen, und
eine erste Fokussierungsvorrichtung (52), um das Licht von einem Objekt auf dem Bildsensor (123) zu fokussieren,
wobei die Farbaufzeichnungsvorrichtung (1) umfasst:
einen Farbbildsensor (12), welcher ausgestaltet ist, Licht in dem sichtbaren Spektrum aufzuzeichnen,
eine zweite Fokussierungsvorrichtung (51), um das Licht von einem Objekt auf dem Farbbildsensor (12) zu fokussieren, und einen Infrarotabschneidefilter (7), welcher ausgestaltet ist, Licht in dem Infrarotspektrum zu filtern, und
wobei der Bildsensor (123) und der Farbbildsensor (12) auf dem gleichen integrierten Chip (6) ausgebildet sind,
wobei die optische Aufzeichnungsvorrichtung (99) ferner umfasst:
eine Raumtrennvorrichtung (9), welche ausgestaltet ist, die erste Fokussierungsvorrichtung (52) und den Raum zwischen der ersten Fokussierungsvorrichtung (52) und dem Bildsensor (123) von der zweiten Fokussierungsvorrichtung (51), dem Infrarotabschneidefilter (7) und dem Raum zwischen der zweiten Fokussierungsvorrichtung (51) und dem Farbbildsensor (12) zu trennen.

2. Optische Aufzeichnungsvorrichtung (99) nach Anspruch 1, wobei die erste und zweite Fokussierungsvorrichtung (51, 52) immer gleichzeitig auf den gleichen Objektbereich fokussiert sind, welcher von der Infrarotaufzeichnungsvorrichtung (2) und der Farbaufzeichnungsvorrichtung (1) aufgezeichnet wird.

3. Optische Aufzeichnungsvorrichtung (99) nach einem der Ansprüche 1 oder 2,
wobei der Farbbildsensor umfasst:
eine Farbfilteranordnung (121), welche ausgestaltet ist, Licht in dem sichtbaren Spektrum in seine Grundfarben zu zerlegen, und
einen Bildsensor (122), welcher ausgestaltet ist, Licht in dem sichtbaren Spektrum aufzuzeichnen.

4. Optische Aufzeichnungsvorrichtung (99) nach einem der vorgenannten Ansprüche,
wobei der integrierte Chip (6) ferner die Schnittstellenvorrichtung (11) umfasst, und wobei die Vorrichtung (99) ferner ein opakes Gehäuse (4) mit einer Öffnung umfasst, welches ausgestaltet ist, den integrierten Chip (6) und die Raumtrennvorrichtung (9) unterzubringen.

5. Optische Aufzeichnungsvorrichtung (99) nach Anspruch 4,
wobei die Schnittstellenvorrichtung (11) mit einer Verarbeitungsvorrichtung (11; 150) verbunden ist oder ein Teil davon ist,
wobei die Verarbeitungsvorrichtung (11; 150) ausgestaltet ist, Daten von der Infrarotaufzeichnungsvorrichtung (2) und der Farbaufzeichnungsvorrichtung (1) zu verarbeiten.

6. Optische Aufzeichnungsvorrichtung (99) nach Anspruch 5,
wobei die Verarbeitungsvorrichtung (11; 150) jeweils Daten von entweder der Infrarotaufzeichnungsvorrichtung (2) oder der Farbaufzeichnungsvorrichtung (1) verarbeitet.

7. Optische Aufzeichnungsvorrichtung (99) nach einem der Ansprüche 5 oder 6,
wobei die Verarbeitungsvorrichtung (11; 150) einen digitalen Signalprozessor umfasst.

8. Optische Aufzeichnungsvorrichtung (99) nach einem der Ansprüche 4-7 und 2,
wobei eine Befestigungsvorrichtung (8) in der Öffnung angeordnet ist und ausgestaltet ist, die erste und zweite Fokussierungsvorrichtung (51, 52) und den Infrarotabschneidefilter (7) zu halten.

9. Optische Aufzeichnungsvorrichtung (99) nach Anspruch 8,
wobei der Infrarotabschneidefilter (7) in der Befestigungsvorrichtung (8) ortsfest angeordnet ist.

10. Optische Aufzeichnungsvorrichtung (99) nach einem der Ansprüche 4-9 und 2,
wobei die erste und zweite Fokussierungsvorrichtung (51, 52) in der Befestigungsvorrichtung (8) in einer unabänderbaren Fokusentfernung ortsfest angeordnet sind.

11. Optische Aufzeichnungsvorrichtung (99) nach einem der Ansprüche 4-9 und 2,
wobei die erste und zweite Fokussierungsvorrichtung (51, 52) durch die Halteposition in der Befestigungsvorrichtung (8) in Bezug zueinander in gegenseitiger Beziehung stehen.

12. Optische Aufzeichnungsvorrichtung (99) nach einem der Ansprüche 4-9 und 2,
wobei die erste und zweite Fokussierungsvorrichtung (51, 52) über eine Fokusentfernungsänderungsvorrichtung (72), welche ausgestaltet ist, die Fokusentfernung der Fokussierungsvorrichtungen zu verändern, in Bezug zueinander in gegenseitiger Beziehung stehen.

13. Optische Aufzeichnungsvorrichtung (99) nach einem der Ansprüche 11 oder 12,
umfassend eine automatische Fokussierungsvorrichtung (101), welche ausgestaltet ist, eine von der ersten und zweiten Fokussierungsvorrichtung (51, 52), vorzugsweise die eine, dessen Bildsensor (12, 123) die bessere Bildauflösung bei den aktuellen Lichtbedingungen aufweist, automatisch zu fokussieren.

14. Optische Aufzeichnungsvorrichtung (99) nach einem der vorgenannten Ansprüche, umfassend eine Infrarotlicht ausstrahlende Diode (100), welche ausgestaltet ist, die Umgebung mit Licht in dem Infrarotspektrum zu beleuchten.

15. Elektronisches System (90), umfassend die optische Aufzeichnungsvorrichtung (99) nach einem der vorgenannten Ansprüche und eine elektronische Einrichtung.

## Revendications

1. Appareil d'enregistrement optique (99) destiné à un équipement électronique sans fil (90) qui comprend un dispositif d'enregistrement infrarouge (2) capable de recevoir de la lumière dans le spectre infrarouge et d'enregistrer des données selon ladite lumière reçue dans ledit spectre infrarouge, un dispositif d'enregistrement de couleurs (1) capable de recevoir de la lumière dans le spectre visible et d'enregistrer des données selon ladite lumière reçue dans ledit spectre visible, et
un dispositif d'interface (3 ; 11) capable de rediriger les données depuis le dispositif d'enregistrement infrarouge (2) et le dispositif d'enregistrement de couleurs (1),
dans lequel le dispositif d'enregistrement infrarouge (2) comprend
un capteur d'image (123) capable d'enregistrer la lumière dans le spectre infrarouge, et
un premier dispositif de concentration (52) destiné à concentrer la lumière qui provient d'un objet sur le capteur d'image (123),
dans lequel le dispositif d'enregistrement de couleurs (1) comprend
un capteur d'image en couleur (12) capable d'enregistrer la lumière dans le spectre visible,
un second dispositif de concentration (51) destiné à concentrer la lumière qui provient d'un objet sur le capteur d'image en couleur (12), et
un filtre de coupure infrarouge (7) capable de filtrer la lumière dans le spectre infrarouge, et
dans lequel le capteur d'image (123) et le capteur d'image en couleur (12) sont formés sur la même puce intégrée (6),
l'appareil d'enregistrement optique (99) comprenant en outre
un dispositif de séparation par un espace (9) capable de séparer le premier dispositif de concentration (52) et l'espace situé entre le premier dispositif de concentration (52) et le capteur d'image (123) du second dispositif de concentration (51), du filtre de coupure infrarouge (7) et de l'espace entre ledit second dispositif de concentration (51) et le capteur d'image en couleur (12).

2. Appareil d'enregistrement optique (99) selon la revendication 1, dans lequel les premier et second dispositifs de concentration (51, 52) sont toujours concentrés en même temps sur la même plage d'objet enregistrée par le dispositif d'enregistrement infrarouge (2) et le dispositif d'enregistrement de couleurs (1).

3. Appareil d'enregistrement optique (99) selon l'une des revendications 1 ou 2,
dans lequel le capteur d'image en couleur comprend
un ensemble de filtres de couleur (121) capables de séparer la lumière du spectre visible selon ses couleurs fondamentales, et un capteur d'image (122) capable d'enregistrer la lumière dans le spectre visible.

4. Appareil d'enregistrement optique (99) selon l'une des revendications susmentionnées,
dans lequel la puce intégrée (6) comprend en outre le dispositif d'interface (11), et l'appareil (99) comprend en outre un logement opaque (4) muni d'une ouverture et capable de contenir la puce intégrée (6) et le dispositif de séparation par un espace (9).

5. Appareil d'enregistrement optique (99) selon la revendication 4, dans lequel le dispositif d'interface (11) est relié à ou fait partie d'un dispositif de traitement (11 ; 150),
moyennant quoi ledit dispositif de traitement (11 ; 150) est capable de traiter les données qui proviennent du dispositif d'enregistrement infrarouge (2) et du dispositif d'enregistrement de couleurs (1).

6. Appareil d'enregistrement optique (99) selon la revendication 5, dans lequel le dispositif de traitement (11 ; 150) traite les données qui proviennent du dispositif d'enregistrement infrarouge (2) ou du dispositif d'enregistrement de couleurs (1) à la fois.

7. Appareil d'enregistrement optique (99) selon l'une des revendications 5 ou 6,
dans lequel le dispositif de traitement (11 ; 150) comprend un processeur de signaux numériques.

8. Appareil d'enregistrement optique (99) selon l'une des revendications 4 à 7 et 2,
dans lequel un dispositif de montage (8) est situé dans l'ouverture et est capable de maintenir les premier et second dispositifs de concentration (51, 52) et le filtre de coupure infrarouge (7).

9. Appareil d'enregistrement optique (99) selon la revendication 8, dans lequel le filtre de coupure infrarouge (7) est placé de manière fixe dans le dispositif de montage (8).

10. Appareil d'enregistrement optique (99) selon l'une des revendications 4 à 9 et 2,
dans lequel les premier et second dispositifs de concentration (51, 52) sont placés de manière fixe dans le dispositif de montage (8) à une distance focale non modifiable.

11. Appareil d'enregistrement optique (99) selon l'une des revendications 4 à 9 et 2,
dans lequel les premier et second dispositifs de concentration (51, 52) sont corrélés l'un par rapport à l'autre par la position de maintien dans le dispositif de montage (8).

12. Appareil d'enregistrement optique (99) selon l'une des revendications 4 à 9 et 2,
dans lequel les premier et second dispositifs de concentration (51, 52) sont corrélés l'un par rapport à l'autre par un dispositif de modification de distance focale (72) capable de modifier la distance focale des dispositifs de concentration.

13. Appareil d'enregistrement optique (99) selon l'une des revendications 11 et 12,
qui comprend un dispositif de concentration automatique (101) capable de concentrer automatiquement l'un des premier et second dispositifs de concentration (51, 52), de préférence celui dont le capteur d'image (12, 123) possède la meilleure résolution d'image dans des conditions de lumière actuelles.

14. Appareil d'enregistrement optique (99) selon l'une des revendications susmentionnées, qui comprend une diode d'émission de lumière infrarouge (100) capable d'éclairer l'environnement avec une lumière du spectre infrarouge.

15. Système électronique (90) qui comprend l'appareil d'enregistrement optique (99) selon l'une des revendications susmentionnées, et un équipement électronique.
